# DEMANDE DE BREVET EUROPEEN

(11) **EP 3 054 359 A1**
(43) Date de publication de la demande: **10.08.2016**
(21) Numéro de dépôt: 15154011.9
(22) Date de dépôt: 05.02.2015
(51) Int. Cl.: G04C 10/00

(54) **Dispositif de montage d'une source d'énergie électrique**

(71) Demandeur: ETA SA Manufacture Horlogère Suisse, 2540 Grenchen (CH)
(72) Inventeur: Kraehenbuehl, David Benjamin, 2544 Bettlach (CH); Jufer, Martin, 4917 Melchnau (CH)
(74) Mandataire: Ravenel, Thierry Gérard Louis

(57) **Abrégé**

Dispositif de montage d'une source d'énergie électrique dans un appareil électronique portable comprenant une cavité et un couvercle pour fermer la cavité, le couvercle comprenant un logement susceptible de recevoir la source d'énergie, le couvercle et l'appareil électronique portable présentant des moyens de fixation complémentaires agencés pour maintenir le couvercle sur l'appareil électronique portable et obturer la cavité. Selon l'invention, le couvercle comprend des moyens de maintien de la source d'énergie dans le logement du couvercle.

## Description

### Domaine de l'invention

L'invention se rapporte au domaine de l'horlogerie, et plus particulièrement aux dispositifs de montage d'une source électrique utilisée dans les appareils électroniques portables.

### Arrière-plan de l'invention

Il est connu du document EP 1 432 052 un dispositif de montage d'une pile dans une montre électronique comportant un logement pour recevoir la pile et un couvercle pour fermer le logement. Le logement comprend, à proximité de sa périphérie, des moyens de retenue élastiques pour retenir la pile dans le logement, et le couvercle présente des moyens de clipsage sur le logement pour permettre le maintien du couvercle sur le logement.

Un tel dispositif présente l'inconvénient de mettre en oeuvre un logement pour la pile qui ne permet pas de bloquer cette dernière en rotation dans le logement, ce qui peut entrainer la corrosion de ladite électrode. Un autre inconvénient de ce dispositif est que la pile doit d'abord être poussée en force pour être introduite dans le logement, puis le couvercle doit être mis en place

Le document FR 2 508 667 décrit un couvercle destiné à obturer une trappe de pile. Le verrouillage du couvercle est obtenu par un système à baïonnette dont la partie mâle est constituée par les ergots du couvercle et dont la partie femelle est constituée par des logements radiaux.

Un tel dispositif présente également l'inconvénient de ne pas offrir un bon maintien de la pile dans son logement ce qui implique un risque rotation de la pile et donc de corrosion. En effet, la pile est simplement déposée dans son logement ce qui ne l'empêche pas de tourner et de s'user au contact des électrodes présentes dans son logement. De plus, ce dispositif ne permet pas un montage aisé et rapide du couvercle sur le fond de la boîte de montre.

### Résumé de l'invention

L'invention a notamment pour objectif de pallier les différents inconvénients de ces techniques connues.

Plus précisément, un objectif de l'invention est de fournir un couvercle de pile présentant un bon maintien de la pile dans son logement.

L'invention a également pour objectif, au moins dans un mode de réalisation particulier, de fournir un dispositif de montage d'une pile qui soit simple et peu coûteux à mettre en oeuvre.

Ces objectifs, ainsi que d'autres qui apparaîtront plus clairement par la suite, sont atteints selon l'invention à l'aide d'un dispositif de montage d'une source d'énergie électrique dans un appareil électronique portable comprenant une cavité et un couvercle pour fermer la cavité, le couvercle comprenant un logement susceptible de recevoir la source d'énergie, le couvercle et l'appareil électronique portable présentant des moyens de fixation complémentaires agencés pour maintenir le couvercle sur l'appareil électronique portable et obturer la cavité.

Selon l'invention, le couvercle comprend des moyens de maintien de la source d'énergie dans le logement du couvercle.

Ainsi, l'objet de la présente invention, par ses différents aspects fonctionnels et structurels décrits ci-dessus, permet d'obtenir un couvercle de pile aisé à installer tout en maintenant radialement et rotativement la pile dans le couvercle.

Conformément à d'autres variantes avantageuses de l'invention :
- les moyens de maintien de la source d'énergie comprennent des languettes présentant une section semi-circulaire ;
- les languettes sont réalisées en une matière plastique déformable ;
- les languettes comprennent chacune une portion chanfreinée de manière à faciliter l'introduction de la source d'énergie dans le couvercle ;
- les moyens de maintien de la source d'énergie comprennent des ergots d'appui configurés pour suppléer les languettes ;
- le couvercle comprend au moins deux clips configurés pour coopérer avec des orifices de clipsage correspondants formés dans la cavité ;
- les orifices de clipsage comprennent un cran formé à proximité de leur entrée, chaque cran étant configuré pour coopérer avec les au moins deux clips ;
- les languettes, les ergots d'appui et les moyens de clipsage forment une pièce monobloc avec le couvercle, ce dernier étant obtenu par injection de matière plastique.

L'invention concerne aussi un appareil électronique comportant des circuits électroniques alimentés par une source d'énergie électrique telle qu'une pile, équipé d'un dispositif de montage de la source d'énergie électrique conforme à l'invention.

### Description sommaire des dessins

D'autres caractéristiques et avantages de l'invention apparaîtront plus clairement à la lecture de la description suivante d'un mode de réalisation particulier de l'invention, donné à titre de simple exemple illustratif et non limitatif, et des figures annexées, parmi lesquelles :
- la figure 1 est une vue en perspective d'un couvercle de pile conforme au dispositif de l'invention ;
- la figure 2 est une vue en coupe d'un couvercle de pile conforme au dispositif de l'invention ;
- la figure 3 est une vue en perspective d'une boite de montre comprenant un dispositif conforme à l'invention.

### Description détaillée des modes de réalisation préférés

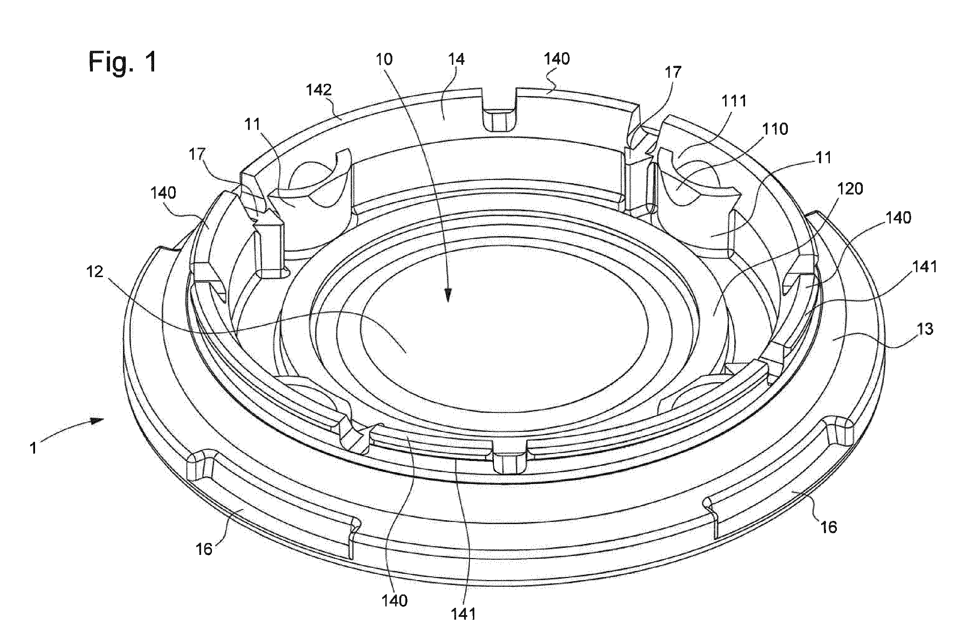

Un dispositif de montage selon un mode de réalisation particulier va maintenant être décrit dans ce qui suit faisant référence conjointement aux figures 1, 2 et 3.

Le dispositif comporte une cavité 2 de forme cylindrique, par exemple, et présente une ouverture circulaire par laquelle on vient introduire un couvercle 1 présentant un logement 10 apte à recevoir et maintenir une source d'énergie telle qu'une pile bouton 3. Avantageusement, le couvercle 1 et l'appareil électronique portable présentent des moyens de fixation complémentaires, tels que des clips, agencés pour maintenir le couvercle 1 sur l'appareil électronique portable et obturer la cavité 2.

Comme on peut l'observer à la figure 1, le couvercle 1 comprend des languettes 11 disposées espacées à la périphérie du logement 10. Chacune des languettes 11 est liée au fond 12 du logement 10 et s'étend verticalement depuis le fond 12. Chacune des languettes 11 se présente sous la forme d'une portion à section hémicirculaire et se termine par une portion chanfreinée 110. L'ouverture ainsi définie par les languettes 11 au sein du logement 10 présente des dimensions inférieures aux dimensions de la pile 3.

Avantageusement, la portion chanfreinée 110 permet d'introduire aisément la pile dans le logement 10 du couvercle 1.

On peut observer sur la figure 1 que le couvercle 1 présente une paroi annulaire 14 en saillie par rapport au fond 12 du logement 10. La périphérie du couvercle 1 présente un épaulement annulaire 13 configuré pour recevoir un joint torique 4, le joint torique 4 étant alors enfilé autour de la paroi annulaire 14.

La paroi annulaire 14 présente des sections de longueurs différentes, et notamment quatre portions, nommées clips 140, de longueur moindre par rapport aux portions rigides 142. Les clips 140 présentent sur leur bord extérieur un cran de clipsage 141.

Le couvercle 1 comprend aussi des encoches 16 de positionnement sur sa périphérie, les encoches 16 étant ouvertes sur le bord périphérique du couvercle 1.

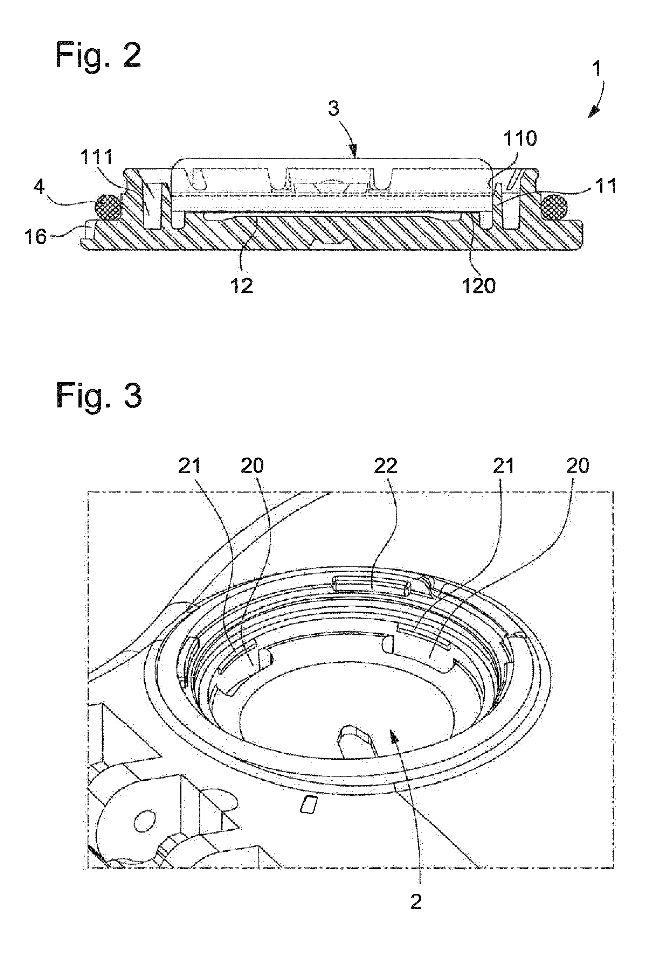

La figure 2 représente une vue en coupe du couvercle de pile représenté sur la figure 1, la pile 3 étant disposée à l'intérieur du logement 10 du couvercle 1.

Les dimensions respectives de la pile 3 et du logement 10 sont telles que ce dernier est apte à recevoir la pile 3, la pile 3 venant en appui contre une arrête 120 circulaire formée sur le fond 12 du logement 10 et la tranche de la pile 3 venant en appui contre les languettes 11. Avantageusement, l'arrête 120 circulaire formée sur le fond 12 présente un diamètre similaire à celui de la pile 3.

Selon un mode de réalisation préférentiel, on peut prévoir des ergots d'appui 17 de la pile à proximité des languettes 11 sur la paroi interne du logement 10. Les ergots d'appui 17 sont prévus en supplément des languettes 11, de façon que si une languette 11 vient à se casser ou à se déformer de trop, l'ergot d'appui 17 contigu prend le relai de la languette 11 cassée/trop déformée. Les ergots d'appui 17 peuvent être réalisés en un matériau compressible exerçant des frottements importants sur la pile, de manière à empêcher cette dernière de tourner sur elle-même.

Le logement 10 comprend, à sa périphérie, des évidements 111 délimités d'une part par la paroi annulaire 14 du logement 10 et, d'autre part, par les languettes 11. Les languettes 11, réalisées de préférence en un matériau flexible, peuvent ainsi se déformer vers l'évidement 111 correspondant lors de la mise en place de la pile 3 dans le logement 10. En effet, les languettes 11, telles que représentées sur les figures 1 et 2, sont préférablement réalisées en une matière plastique présentant des propriétés élastiques. De ce fait et étant données les dimensions respectives du logement 10, des languettes 11 et de la pile 3, l'introduction de la pile dans le logement 10 est effectuée par un positionnement de la pile 3 sur la portion chanfreinée 110 des languettes 11, suivi d'une pression exercée sur la pile 3 en direction du fond 12 du logement 10. Lors de la mise en place de la pile 3, les languettes 11 sont simultanément déformées en direction de l'évidement 111, ce qui entraîne une déformation élastique des languettes 11 et permet l'introduction en force de la pile 3 dans le logement 10 du couvercle 1.

Une fois la pile 3 positionnée contre le fond 12 du logement 10, les languettes 11 tendent à reprendre leur forme initiale respective grâce à leur élasticité, ce qui permet d'assurer le maintien de la pile 3 et de l'empêcher de tourner une fois mise en place dans le couvercle 1.

Un système de fixation du couvercle 1 dans la cavité 2 est par ailleurs prévu. Chacun des clips 140 est pourvue d'un cran de clipsage 141 sur sa surface externe, qui s'étend d'un bord du clip 140 à l'autre. La paroi de la cavité 2 présente, sur sa surface interne, pour chaque cran de clipsage 141 un orifice 20 correspondant. Les orifices 20 correspondants présentent un cran 21 à proximité de leur entrée, chaque cran 21 étant destiné à coopérer avec un cran de clipsage 141 d'un clip 140. Ainsi, lorsque le couvercle 1 est disposé dans la cavité 2, l'ensemble des crans de clipsage 141 et des crans 21 sont situés en regard l'un de l'autre et coopèrent de manière à maintenir le couvercle 1 dans la cavité 2 par clipsage.

On peut également observer à la figure 3 que la cavité 2 présente, à proximité des bords de son ouverture, des pattes de positionnement 22 configurées pour coopérer avec les encoches 16 du couvercle 14 et ainsi bien positionner le couvercle sur la cavité 2.

On peut noter que les moyens de connexion électrique des pôles de la pile n'ont été ni décrits, ni représentés, dans la mesure où ils sont réalisés de manière conventionnelle et n'apportent pas de contribution particulière à la présente invention. L'homme du métier ne rencontrera pas de difficulté particulière pour leur mise en oeuvre.

La description qui précède correspond à un mode de réalisation préféré et ne saurait en aucun cas être considérée comme limitative, en ce qui concerne plus particulièrement la forme décrite pour les différents éléments structurels composant le dispositif de montage ou leurs matériaux. L'homme du métier ne rencontrera pas de difficulté particulière pour choisir, par exemple pour les moyens de retenue de la pile, tout autre matériau présentant les propriétés mécaniques nécessaires à la mise en oeuvre de la présente invention.

Les applications possibles pour un tel dispositif de montage de pile sont très nombreuses puisque la présente invention peut être mise en oeuvre pour tout type d'appareil électronique portable, notamment à la main ou au poignet, tel une montre-bracelet électronique par exemple.

### NOMENCLATURE

- 1.: Couvercle,
- 10.: Logement,
- 11.: Languette,
- 110.: Portion chanfreinée,
- 111.: Evidements,
- 12.: Fond du couvercle,
- 120.: Arrête,
- 13.: Epaulement annulaire,
- 14.: Paroi annulaire du logement,
- 140.: Clips,
- 141.: Cran de clipsage,
- 142.: portions rigides,
- 16.: Encoches,
- 17.: Ergots d'appui,
- 2.: Cavité,
- 20.: Orifice,
- 21.: Cran,
- 22.: Patte de positionnement,
- 3.: Pile,
- 4.: Joint torique.

## Revendications

1. Dispositif de montage d'une source d'énergie électrique dans un appareil électronique portable comprenant une cavité (2) et un couvercle (1) pour fermer la cavité (2), le couvercle comprenant un logement (10) susceptible de recevoir la source d'énergie, le couvercle (1) et l'appareil électronique portable présentant des moyens de fixation complémentaires agencés pour maintenir le couvercle sur l'appareil électronique portable et obturer la cavité (2),
**caractérisé en ce que** le couvercle (1) comprend des moyens de maintien de la source d'énergie dans le logement (10) du couvercle (1).

2. Dispositif de montage selon la revendication 1, dans lequel les moyens de maintien de la source d'énergie comprennent des languettes (11) présentant une section semi-circulaire .

3. Dispositif de montage selon la revendication 2, dans lequel les languettes (11) sont réalisées en une matière plastique déformable.

4. Dispositif de montage selon la revendication 2 ou 3 , dans lequel les languettes (11) comprennent chacune une portion (110) chanfreinée de manière à faciliter l'introduction de la source d'énergie dans le logement (10) du couvercle (1).

5. Dispositif de montage selon la revendication 1, dans lequel les moyens de maintien de la source d'énergie comprennent des ergots d'appui (17) configurés pour suppléer les languettes (11).

6. Dispositif de montage selon l'une quelconque des revendications 1 à 5, dans lequel le couvercle comprend au moins deux clips (140) configurés pour coopérer avec des orifices (20) de clipsage correspondants formés dans la cavité (2).

7. Dispositif de montage selon la revendication 6, dans lequel les orifices (20) de clipsage comprennent un cran (141) formé à proximité de leur entrée, chaque cran (141) étant configuré pour coopérer avec les au moins deux clips (140).

8. Dispositif de montage selon l'une quelconque des revendications 1 à 7, dans lequel les languettes (11), les ergots d'appui (17) et les moyens de clipsage forment une pièce monobloc avec le couvercle (1), ce dernier étant obtenu par injection de matière plastique.

9. Appareil électronique comportant des circuits électroniques alimentés par une source d'énergie électrique telle qu'une pile (3), **caractérisé en ce qu'**il comprend un dispositif de montage de la source d'énergie électrique selon l'une des revendications précédentes.
